# EUROPÄISCHE PATENTANMELDUNG

(11) **EP 2 546 521 A1**
(43) Veröffentlichungstag der Anmeldung: **16.01.2013**
(21) Anmeldenummer: 11174177.3
(22) Anmeldetag: 15.07.2011
(51) Int. Cl.: F03G 6/00, F22B 1/02

(54) **Niederdruck-Mehrleistungs-Vorwärmer für die Frequenz- bzw. Sekundär- und/oder Primärregelung bei einem solarthermischen Kraftwerk**

(71) Anmelder: SIEMENS AKTIENGESELLSCHAFT, 80333 München (DE)
(72) Erfinder: Wiesenmüller, Wolfgang, 90762 Fürth (DE)

(57) **Zusammenfassung**

Die Offenbarung betrifft eine solarthermische Kraftwerksanlage (1) mit einem Primärkreislauf (2), der ein Solarfeld (4) umfasst, einem Sekundärkreislauf (3), der eine Turbine (6) zur Entspannung eines Arbeitsmediums, einen Kondensator (8) und einen Speisewasserbehälter (9) umfasst, wobei ein Wärmeübertrager (16) primärseitig in den Primärkreislauf (2) schaltbar ist und sekundärseitig in eine Niederdruck-Vorwärmstrecke für das Arbeitsmedium zwischen Kondensator (8) und Speisewasserbehälter (9) geschaltet ist. Die Offenbarung betrifft ferner ein Verfahren zur schnellen und vorübergehenden Erhöhung der Leistung einer solarthermischen Kraftwerksanlage (1).

## Beschreibung

Die Erfindung betrifft eine solarthermische Kraftwerksanlage, und bezieht sich auf die Frequenz- bzw. Sekundär- und/oder Primärregelung. Die Erfindung betrifft ferner ein Verfahren zur schnellen und vorübergehenden Erhöhung der Leistung einer solarthermischen Kraftwerksanlage.

In einem deregulierten Strommarkt gewinnen ein flexibler Lastbetrieb und Einrichtungen zur Frequenzregelung für den Kraftwerksbetrieb immer mehr an Bedeutung. Bei solar betriebenen Systemen darf der erzeugte Strom zurzeit immer vollständig ins Netz eingespeist werden. Deshalb wird hier bisher stets die maximal aus der Einstrahlung umsetzbare Leistung genutzt.

Doch selbst für solarthermische Kraftwerke kann die Teilnahme an Frequenzregelung wirtschaftlich attraktiv sein, da derartige Netzdienstleistungen für den Betreiber gesondert vergütet werden. Hinzu kommt, dass mit dem Ausbau der regenerativen Energien (Windenergie) auch eine prinzipielle Verschärfung der Anforderungen an die Regelfähigkeit der unterschiedlichen Kraftwerkstypen zu erwarten ist. So ist zu erwarten, dass die Anforderung zur Frequenzregelung zukünftig auch für solarthermische Kraftwerke festgeschrieben werden wird. Für Kraftwerkstypen, die in Deutschland Frequenzregelung nach dem derzeitig gültigen Transmission Codes bereitstellen müssen, sind als Mindestanforderung für die Primärregelung 2% Leistungssteigerung in 30 Sekunden zu erbringen und mindestens für 15 Minuten abzugeben. Für Sekundärregelung sind 2%/min für 5 Minuten zu erbringen. Gelingt es beispielsweise, eine höhere Sekundärregelreserve als mindestens gefordert bereitzustellen, kann ein Betreiber auch diese mit entsprechend höherem Gewinn vermarkten. Hinzu kommt, dass in anderen elektrischen Netzen je nach Größe des Netzes und Struktur der Erzeugungseinheiten auch höhere Leistungsgradienten zur Frequenzregelung gefordert werden, wie dies zum Beispiel auch im britischen Grid Code mit einer Forderung nach 10% Leistungssteigerung innerhalb von 10 Sekunden der Fall ist. Dies ist dann Voraussetzung 3für den Netzzugang für Kraftwerkstypen, die Frequenzregelung erbringen müssen.

Frequenz- bzw. Primär- und Sekundärregelung wird bisher von anderen Kraftwerkstypen erbracht. Dort sind zur Beschleunigung der Leistungsänderungen im Rahmen von Sekundär- und/oder Primärregelung schnell wirkende Zusatzmaßnahmen erforderlich, die eine abgestimmte Nutzung im Kraftwerk vorhandener Energiespeicher erfordert. Bisher finden Maßnahmen wie Drosselung der Hochdruck-Turbinenregelventile, Überlasteinleitung zur Hochdruckteilturbine, Kondensatstau, speisewasserseitige Umgehung der Hochdruckvorwärmer sowie Androsselung der Anzapfdampfleitungen zu den Hochdruckvorwärmern Verwendung, um die Anlagendynamik zu verbessern. Die Begrenzungen dieser Energiespeicher begrenzen auch die zur Verfügung stellbare Sekundär- / Primärregelleistung. Der Kondensatstau beispielsweise stellt kurzfristig, schnell und temporär mehr Dampf im ND-/MD-Teil der Turbine zur Verfügung. Dies funktioniert wie folgt: Auf Anforderung wird die Kondensatregelstation angedrosselt, so dass der Kondensatmassenstrom durch die Niederdruck-Vorwärmstrecke entsprechend reduziert wird. Der Anzapfdampfmassenstrom der Niederdruck-Vorwärmer und des Entgasers wird dadurch - ggf. unterstützt durch zusätzliche Regelorgane in den Anzapfdampfleitungen - reduziert, wodurch mehr Dampf in der Turbine verbleibt und dadurch mehr Leistung erzeugt wird. Das Reduzieren des Kondensatmassenstroms ist erforderlich, damit sich die Wassertemperatur im Speisewasserbehälter nicht ändert und sich dadurch keine Rückwirkungen auf die Dampferzeugung ergeben. Der Kondensatstau dient dabei zur Kompensation der beim Dampferzeuger inhärenten Tot- und Verzugszeiten. Das zusätzliche Kondensat wird in den Hotwell des Kondensators oder in separaten Behältern eingespeichert. Aufgrund der beschränkten Volumina ist diese Kompensation auf wenige Minuten begrenzt. Parallel dazu muss die Feuerungsrate des Dampferzeugers entsprechend erhöht werden, um die gestiegene Leistungsanforderung längerfristig zu erfüllen und den Kondensatstau im Minutenbereich abzulösen. Da der Speisewasserbehälter nur mit einem reduzierten Kondensatmassenstrom bespeist wird, sinkt der Füllstand entsprechend ab. Mit steigender Dampferzeugerleistung kann die Androsselung der Kondensatregelstation wieder verringert werden bis schließlich ein stationärer Betriebszustand erreicht ist. Um den Ursprungszustand wiederherzustellen, muss das zwischenzeitlich in den Hotwell oder in die separaten Behälter eingespeicherte Kondensat wieder zurück in den Speisewasserbehälter gefördert werden.

Aufgabe der Erfindung ist es, eine solarthermische Kraftwerksanlage für die Frequenz- bzw. Sekundär- und/oder Primärregelung bereitzustellen. Eine weitere Aufgabe der Erfindung ist es, ein Verfahren zur schnellen und vorübergehenden Erhöhung der Leistung einer solarthermischen Kraftwerksanlage, ohne den solarthermischen Prozess zu stören, anzugeben. Dabei ist es unerheblich, ob das solarthermische Kraftwerk bereits die maximal aus der Einstrahlung umsetzbare Leistung nutzt oder nicht.

Erfindungsgemäß wird diese Aufgabe gelöst durch die Vorrichtung gemäß Anspruch 1 und das Verfahren gemäß Anspruch 6. Vorteilhafte Weiterbildungen der Erfindung sind in den jeweiligen abhängigen Ansprüchen definiert. Indem bei einer solarthermischen Kraftwerksanlage mit einem Primärkreislauf, der ein Solarfeld umfasst, einem Sekundärkreislauf, der eine Turbine zur Entspannung eines Arbeitsmediums, einen Kondensator und einen Speisewasserbehälter umfasst, ein Wärmeübertrager primärseitig in den Primärkreislauf schaltbar ist und sekundärseitig in eine Niederdruck-Vorwärmstrecke für das Arbeitsmedium zwischen Kondensator und Speisewasserbehälter geschaltet ist, wird folgendes erreicht:
Ein solarthermisches Kraftwerk arbeitet nach einem Zweikreisprinzip. Im Solarfeld des Primärkreislaufs wird das die Solarkollektoren durchströmende Wärmeträgermedium (z.B. Öl, Wasser-Glykol, Wasser-Ethanol oder Wasser) durch die solare Einstrahlung erwärmt. Die aufgenommene Energie wird dann in einem mehrstufigen Wärmeübertrager an den Sekundärkreislauf, einen Wasser-Dampf-Kreislauf, abgegeben. Dieser arbeitet prinzipiell wie ein konventioneller Kraftwerksprozess. Das Speisewasser wird in dem mehrstufigen Wärmeübertrager aufgewärmt, verdampft und überhitzt. Anschließend entspannt sich der Dampf über die Turbine, wobei ein Generator zur Stromerzeugung angetrieben wird. Die Verflüssigung des Abdampfs erfolgt über einen Kondensator. Sowohl im Primär- als auch im Sekundärkreislauf sind Pumpen für den Fluidtransport notwendig. Zur Verlängerung der täglichen Betriebszeiten und zum Ausgleich von starken Strahlungsschwankungen können thermische Speicher eingesetzt werden. Je nach Wärmeträgermedium ist eine zusätzliche Feuerung mit fossilen Energieträgern vorgesehen, um das Wärmeträgermedium im Primärkreislauf auch bei Anlagenstillstand flüssig zu halten. Ein Kondensatstau zur Kompensation der beim Dampferzeuger inhärenten Tot- und Verzugszeiten funktioniert bei einem solarthermischen Kraftwerk nicht. Aufgrund der Abhängigkeit von der Sonneneinstrahlung und der Trägheit des solarthermischen Prozesses ist es nicht möglich, die Dampferzeugerleistung innerhalb der geforderten wenigen Minuten entsprechend zu erhöhen und dadurch den Kondensatstau wieder abzulösen. Daher kann die Mehrleistung wie im Falle von Primärregelung gefordert nicht über mindestens 15 Minuten abgegeben werden.

Durch Einbau eines zusätzlichen Niederdruck-Mehrleistungs-Vorwärmers als zuschaltbaren Wärmeübertrager an geeigneter Stelle in der Niederdruck-Vorwärmstrecke des Sekundärkreislaufs (Position abhängig von der verbleibenden Temperatur des Wärmeträgermediums nach Durchlaufen des Dampferzeugers) kann auf gesteigerte Leistungsanforderungen hin vorübergehend und vor allem schnell zusätzliche Energie aus dem Primärkreis in den Sekundärkreis eingekoppelt werden.

Zweckmäßiger Weise geschieht dies mittels einer vom Primärkreislauf abzweigenden Leitung, in der ein Regelorgan angeordnet ist, einer Rückleitung vom Wärmeübertrager zum Primärkreislauf, sowie eines zwischen abzweigender Leitung und Rückleitung im Primärkreislauf angeordneten Regelorgans. Über diese Ventile oder Regelorgane wird der als Niederdruck-Mehrleistungs-Vorwärmer wirkende Wärmeübertrager mit Wärmeträgermedium beaufschlagt. In dem Maße wie diese zusätzliche Energie in den Sekundärkreislauf eingekoppelt wird, werden die Anzapfdampfmassenströme zu anderen Niederdruck-Vorwärmern durch Regelorgane in den Anzapfdampfleitungen oder ggf. auch automatisch durch Erhöhung der Kondensattemperatur durch den zusätzliche Niederdruck-Mehrleistungs-Vorwärmer für nachfolgende Niederdruck-Vorwärmer entsprechend reduziert, wodurch mehr Dampf in der Turbine verbleibt und dadurch mehr Leistung erzeugt wird. Die dadurch bewirkte rasche Änderung der Generatorleistung kann für Frequenz- bzw. Sekundär- und / oder Primärregelung genutzt werden.

Es ist vorteilhaft, wenn die solarthermische Kraftwerksanlage einen weiteren Wärmeübertrager umfasst, der primärseitig in den Primärkreislauf und sekundärseitig in den Sekundärkreislauf zur Erwärmung, Verdampfung und Überhitzung des Arbeitsmediums geschaltet ist, wobei der weitere Wärmeübertrager in Strömungsrichtung eines Wärmeübertragungsmediums im Primärkreislauf dem Solarfeld nach- und dem Wärmeübertrager vorgeschaltet ist.

Weiterhin ist es vorteilhaft, wenn die solarthermische Kraftwerksanlage einen thermischen Speicher oder die Möglichkeit der Temperaturerhöhung über Zufeuerung insbesondere mit Erdgas für ein Wärmeübertragungsmedium umfasst, wobei der Speicher bzw. die Zufeuerung in Strömungsrichtung eines Wärmeübertragungsmediums im Primärkreislauf dem Solarfeld nach- und dem weiteren Wärmeübertrager vorgeschaltet ist. Durch optionale Einbindung im Primärkreislauf vorhandener thermischer Speicher oder Zufeuerung kann die zeitliche Wirksamkeit der vorgeschlagenen Maßnahme noch verlängert werden.

Im erfinderischen Verfahren zur schnellen und vorübergehenden Erhöhung der Leistung einer solarthermischen Kraftwerksanlage mit einem Primärkreislauf und einem Sekundärkreislauf, der eine Turbine, einen Kondensator und einen Speisewasserbehälter aufweist, bei dem mittels Dampfanzapfungen aus der Turbine eine Niederdruckvorwärmung erfolgt, wird Wärme aus dem Primärkreis auf den Sekundärkreis im Bereich einer Niederdruckvorwärmstrecke zwischen Kondensator und Speisewasserbehälter übertragen und werden Anzapfmassenströme aus der Turbine für die Niederdruckvorwärmung reduziert.

Dabei ist es vorteilhaft, wenn Wärme aus einem Speicher in den Primärkreislauf übertragen wird.

Die Erfindung sieht somit vor, die Trägheit des solarthermischen Prozesses und die im Primärkreis eines solarthermischen Kraftwerks gespeicherten Energieinhalte (inklusive der ggf. vorhandenen thermischen Speicher) als alleinstehende oder zusätzliche Maßnahme zu nutzen, um Frequenz- bzw. Sekundär/Primärregelreserve auch bei einem solarthermischen Kraftwerk zur Verfügung zu stellen. In Kombination mit anderen, konventionellen Maßnahmen lässt sich dadurch die zur Verfügung stellbare Frequenz- bzw. Sekundär- / Primärregelreserve eines solarthermischen Kraftwerks entsprechend erhöhen. Verglichen mit einem Kondensatstau ist die vorgeschlagene Maßnahme wesentlich länger wirksam und benötigt zwar einen zusätzlichen Wärmeübertrager als Niederdruck-Mehrleistungs-Vorwärmer, dafür jedoch keine zusätzlichen Speichervolumina beim Kondensator-Hotwell oder in Form von separaten Kondensatspeicherbehältern bzw. beim Speisewasserbehälter. Im Gegensatz zur Androsselung der Hochdruck-Turbinenregelventile kommt es bei der vorgeschlagenen Maßnahme nicht zu einem ständigen Wirkungsgradverlust, selbst wenn gerade keine Regelleistung angefordert wird. Des Weiteren wird im Falle einer Primärregelung ausgenutzt, dass es sich bei der Primärregelung um einen Prozess handelt, der stochastische Schwankungen der Netzfrequenz um einen Mittelwert herum ausregelt. Die Auswirkungen auf den solarthermischen Prozess sind daher bei den üblicherweise auszuregelnden kleinen Frequenzabweichungen aufgrund der Trägheit des solarthermischen Prozesses zu vernachlässigen. Für die vergütbare Sekundärregelreserve zählt in Deutschland die Mehrleistung, die nach 5 Minuten vom Kraftwerk erreicht wird. Auch dafür kann die durch die vorgeschlagene Maßnahme kurzfristig erzeugbare Mehrleistung genutzt werden. Durch Nutzung des abgekühlten Wärmeträgermediums im Bereich der Niederdruck-Vorwärmstrecke anstelle Nutzung des heißen Wärmeträgermediums (vor Durchlaufen des Dampferzeugers) im Bereich der Hochdruck-Vorwärmstrecke halten sich die thermischen Belastungen für den zusätzlichen Vorwärmer in vertretbaren Grenzen. Eine Verbesserung der Frequenz- bzw. der Sekundär- und / oder Primärregelfähigkeit eines Kraftwerks schafft einerseits einen Wettbewerbsvorteil für den Anbieter des Kraftwerks. Andererseits erhöht dies den Gewinn des Betreibers, der damit entsprechende Frequenz- bzw. Sekundär- und / oder Primärregelreserve als zusätzliche Netzdienstleistung anbieten und verkaufen kann. Zudem kann dadurch der Zugang zu Märkten mit entsprechend extremen Netzanschlussbedingungen verbessert/ermöglicht werden.

Die Erfindung wird beispielhaft anhand der Zeichnungen näher erläutert. Es zeigen schematisch und nicht maßstäblich:
- Figur 1: eine solarthermische Kraftwerksanlage nach dem Stand der Technik und
- Figur 2: eine solarthermische Kraftwerksanlage nach der Erfindung.

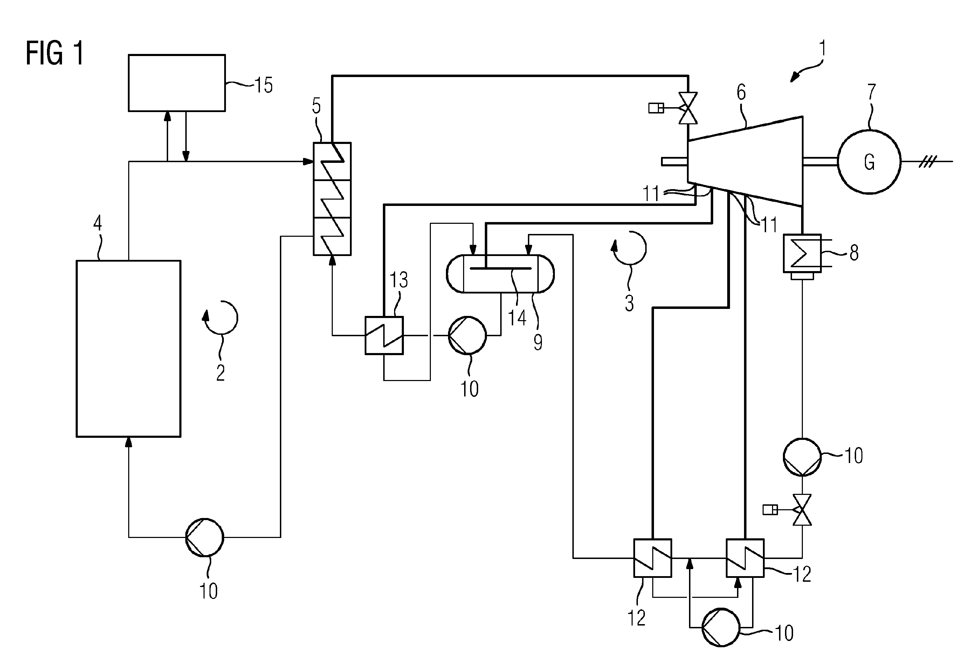

Die Figur 1 zeigt schematisch und beispielhaft eine solarthermische Kraftwerksanlage 1 nach dem Stand der Technik. Die solarthermische Kraftwerksanlage 1 umfasst einen Primärkreislauf 2 und einen Sekundärkreislauf 3. Der Primärkreislauf 2 weist ein Solarfeld 4 mit Solarkollektoren auf, die von einem Wärmeträgermedium (z.B. Öl, Wasser-Glykol, Wasser-Ethanol oder Wasser) durchströmt werden, welches durch die solare Einstrahlung erwärmt wird. Die aufgenommene Energie wird dann in einem mehrstufigen Wärmeübertrager 5 an den Sekundärkreislauf 3, einen Wasser-Dampf-Kreislauf, abgegeben. Dieser arbeitet prinzipiell wie ein konventioneller Kraftwerksprozess. Das Speisewasser wird in dem mehrstufigen Wärmeübertrager 5 aufgewärmt, verdampft und überhitzt. Anschließend entspannt sich der Dampf über die Turbine 6, wobei ein Generator 7 zur Stromerzeugung angetrieben wird. Die Verflüssigung des Abdampfs erfolgt über einen Kondensator 8. Das Kondensat wird dem Speisewasserbehälter 9 zugeführt. Sowohl im Primär- 2 als auch im Sekundärkreislauf 3 sind Pumpen 10 für den Fluidtransport vorgesehen. Mittels Dampfanzapfungen 11 aus der Turbine 6 erfolgt eine Niederdruckvorwärmung des Kondensats in Wärmeübertragern 12 bzw. eine Speisewasservorwärmung im Wärmeübertrager 13 bzw. eine thermische Entgasung des Speisewassers im Entgaser 14. Zur Verlängerung der täglichen Betriebszeiten und zum Ausgleich von starken Strahlungsschwankungen können thermische Speicher 15 eingesetzt werden.

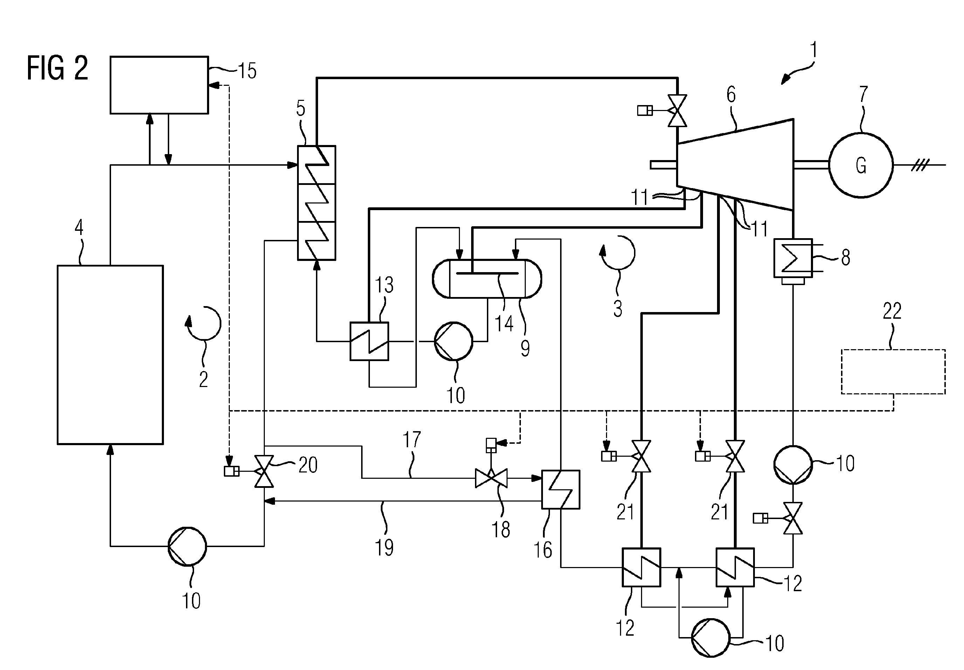

Figur 2 zeigt eine solarthermische Kraftwerksanlage 1 nach der Erfindung, bei der ein Wärmeübertrager 16 als Niederdruck-Mehrleistungs-Vorwärmer sekundärseitig in die Niederdruckvorwärmstrecke zwischen Kondensator 8 und Speisewasserbehälter 9 geschaltet ist. Primärseitig ist der Wärmeübertrager 16 mittels einer vom Primärkreislauf 2 abzweigenden Leitung 17, in der ein Regelorgan 18 angeordnet ist, einer Rückleitung 19 vom Wärmeübertrager 16 zum Primärkreislauf 2, sowie eines zwischen abzweigender Leitung 17 und Rückleitung 19 im Primärkreislauf 2 angeordneten Regelorgans 20 in den Primärkreislauf 2 schaltbar.

Der Anzapfdampfmassenstrom der Niederdruck-Vorwärmer 12 und des Entgasers 14 wird dadurch - ggf. unterstützt durch zusätzliche Regelorgane 21 in den Anzapfdampfleitungen - reduziert, wodurch mehr Dampf in der Turbine 6 verbleibt und dadurch mehr Leistung erzeugt wird. Zur Koordinierung der Regelorgane 18, 20, 21 und ggfs. des Speichers 15 ist eine entsprechende Einrichtung 22 vorgesehen.

## Patentansprüche

1. Solarthermische Kraftwerksanlage (1) mit einem Primärkreislauf (2), der ein Solarfeld (4) umfasst, einem Sekundärkreislauf (3), der eine Turbine (6) zur Entspannung eines Arbeitsmediums, einen Kondensator (8) und einen Speisewasserbehälter (9) umfasst, **dadurch gekennzeichnet, dass** ein Wärmeübertrager (16) primärseitig in den Primärkreislauf (2) schaltbar ist und sekundärseitig in eine Niederdruck-Vorwärmstrecke für das Arbeitsmedium zwischen Kondensator (8) und Speisewasserbehälter (9) geschaltet ist.

2. Solarthermische Kraftwerksanlage (1) nach Anspruch 1, wobei der Wärmeübertrager (16) mittels einer vom Primärkreislauf (2) abzweigenden Leitung (17), in der ein Regelorgan (18) angeordnet ist, einer Rückleitung (19) vom Wärmeübertrager (16) zum Primärkreislauf (2), sowie eines zwischen abzweigender Leitung (17) und Rückleitung (19) im Primärkreislauf (2) angeordneten Regelorgans (20) in den Primärkreislauf (2) schaltbar ist.

3. Solarthermische Kraftwerksanlage (1) nach Anspruch 1 oder 2, weiter umfassend einen weiteren Wärmeübertrager (5), der primärseitig in den Primärkreislauf (2) und sekundärseitig in den Sekundärkreislauf (3) zur Erwärmung, Verdampfung und Überhitzung des Arbeitsmediums geschaltet ist, wobei der weitere Wärmeübertrager (5) in Strömungsrichtung eines Wärmeübertragungsmediums im Primärkreislauf (2) dem Solarfeld (4) nach- und dem Wärmeübertrager (16) vorgeschaltet ist.

4. Solarthermische Kraftwerksanlage (1) nach einem der Ansprüche 1 bis 3, weiter umfassend einen thermischen Speicher (15) für ein Wärmeübertragungsmedium.

5. Solarthermische Kraftwerksanlage (1) nach Anspruch 4, wobei der Speicher (15) in Strömungsrichtung eines Wärmeübertragungsmediums im Primärkreislauf (2) dem Solarfeld (4) nach- und dem weiteren Wärmeübertrager (5) vorgeschaltet ist.

6. Verfahren zur schnellen und vorübergehenden Erhöhung der Leistung einer solarthermischen Kraftwerksanlage (1) mit einem Primärkreislauf (2) und einem Sekundärkreislauf (3), der eine Turbine (6), einen Kondensator (8) und einen Speisewasserbehälter (9) aufweist, bei dem mittels Dampfanzapfungen (11) aus der Turbine (6) eine Niederdruckvorwärmung erfolgt, **dadurch gekennzeichnet, dass** Wärme aus dem Primärkreis (2) auf den Sekundärkreis (3) im Bereich einer Niederdruckvorwärmstrecke zwischen Kondensator (8) und Speisewasserbehälter (9) übertragen wird und Anzapfmassenströme aus der Turbine (6) für die Niederdruckvorwärmung reduziert werden.

7. Verfahren nach Anspruch 7, wobei Wärme aus einem Speicher (15) in den Primärkreislauf (2) übertragen wird.
